# FASCICULE DE BREVET EUROPEEN

(11) **EP 1 293 085 B1**
(45) Date de publication et mention de la délivrance du brevet: **12.10.2005**
(21) Numéro de dépôt: 01945424.8
(22) Date de dépôt: 13.06.2001
(51) Int. Cl.: H04M 3/24, H04M 3/10

(54) **SYSTEME DE MAINTENANCE D'UNE INSTALLATION DE TELECOMMUNICATION**
WARTUNGSSYSTEM FÜR EINE TELEKOMMUNIKATIONSEINRICHTUNG
MAINTENANCE SYSTEM FOR A TELECOMMUNICATION INSTALLATION

(30) Priorité: 23.06.2000 FR 0008199
(43) Date de publication de la demande: 19.03.2003
(73) Titulaire: FRANCE TELECOM, 75015 Paris (FR)
(72) Inventeur: BOURGART, Fabrice, F-22700 Perros Guirec (FR)
(74) Mandataire: Lapoux, Roland
(86) Numéro de dépôt international: PCT/FR2001/001841
(87) Numéro de publication internationale: WO 2001/099395

(56) Documents cités:
- DE-A- 19 537 087
- US-A- 4 972 453

## Description

La présente invention concerne de manière générale l'exploitation et la maintenance d'une installation de télécommunication privée comportant notamment des équipements tels que des terminaux.

L'installation de télécommunication est une installation moderne qui a priori regroupe plusieurs terminaux chez un client ayant accès à différents opérateurs, tels qu'un terminal de télévision par satellite, un micro-ordinateur relié au réseau Internet via une ligne ADSL, et un poste téléphonique numérique. Un moyen de gestion est inclus dans l'installation pour gérer l'ensemble des équipements de l'installation, les authentifications de droit d'accès, les profils des utilisateurs des terminaux, les transcodages et les adaptations au moins à une ligne de réseau desservant l'installation.

Pour maintenir en état de bon fonctionnement une installation de télécommunication privée aussi complexe, le client peut faire appel à un prestataire gestionnaire de l'installation, et accepte ainsi une intrusion par un tiers dans son domaine privé, en faisant connaître l'ensemble des terminaux et des installations installées disponibles chez lui. Si cela est tolérable dans le cas de réseaux collectifs de type campus ou immeuble avec les services proposés par des syndics, cela est plutôt sujet à controverse chez les particuliers ou chez les professionnels.

Dans les installations de télécommunication récentes, par exemple du type RNIS, seule une surveillance de la qualité et de l'état des terminaux est mise en oeuvre. Cependant, cette surveillance est effectuée depuis l'autocommutateur de rattachement et à la condition que les équipements de réseau jusqu'aux terminaux soient en liaison directe. Une telle contrainte ne peut plus être la règle dans une installation de type réseau privatif dont la vie et le cycle d'introduction de nouveaux terminaux et de nouvelles applications se raccourcissent de plus en plus.

Une télé-exploitation est mise en oeuvre pour certains réseaux de clients équipés de routeurs et de terminaisons de réseau récentes et complexes. Selon une première variante, l'installation est gérée par du personnel formé sur place chez le client ou par un prestataire de service qui reprend les configurations des équipements à chaque modification. Selon une deuxième variante, relative à une télé-configuration ou télé-gestion de terminaisons, cela suppose que l'évolution demandée ne soit que de nature logicielle, ou que l'intervention sur chaque équipement soit effectuée par le client et ne nécessite pas de compétence très particulière.

US 497 2453 décrit un système expert autonome de maintenance d'installations de télécommunication. Depuis l'installation de télécommunication, des informations concernant des défaillances et des alarmes sont envoyées à un système centralisé. Le système expert accède à des rapports de défaillance, établit une connexion de données avec l'installation de télécommunication qui a rapporté la panne et exécute des procedures de dépannage.

La présente invention vise principalement à fournir un système de maintenance d'une installation de télécommunication privative respectant particulièrement la confidentialité de la composition de l'installation tout en facilitant la maintenance de celle-ci de manière autonome pour le client.

A cette fin, un système de maintenance d'une installation de télécommunication à l'aide d'un serveur de maintenance, ladite installation comprenant des équipements, un moyen de gestion d'installation et un moyen de communication entre une ligne de réseau et les équipements et le moyen de gestion, est caractérisé en ce qu'il comprend un moyen d'assistance portable pour établir des informations sur le type de l'installation et sur au moins une défaillance dans l'installation afin que le serveur de maintenance sélectionne une session de maintenance en fonction des informations de défaillance transmises par le moyen d'assistance et présente des consignes dans le moyen d'assistance.

De préférence, afin d'éviter des erreurs de saisies fastidieuses, le moyen d'assistance comprend un moyen, tel qu'un lecteur de code à barres, pour saisir automatiquement un identificateur de l'installation et une adresse de télécommunication du serveur de maintenance sur le moyen de gestion ou sur le moyen de communication afin d'appeler automatiquement le serveur de maintenance en fonction de l'adresse saisie, puis d'effectuer une session de maintenance entre le moyen d'assistance et le serveur de maintenance en fonction de l'identificateur d'installation saisi. Le moyen pour saisir peut également saisir automatiquement un identificateur et une adresse de télécommunication de fabricant sur au moins l'un des équipements afin d'appeler automatiquement un serveur du fabricant de l'équipement en fonction de l'adresse saisie, puis d'effectuer une session de configuration de l'équipement entre le moyen d'assistance et le serveur de fabricant en fonction de l'identificateur d'équipement saisi.

L'invention concerne également un procédé de maintenance d'une installation de télécommunication telle que définie ci-dessus pour la mise en oeuvre du système de maintenance selon l'invention. Le procédé de maintenance est caractérisé en ce qu'il comprend les étapes suivantes :
- fournir un moyen d'assistance portable, et un serveur de maintenance tels que définis ci-dessus,
- appeler le serveur de maintenance depuis le moyen d'assistance,
- transmettre les informations sur le type d'installation et sur au moins une défaillance de l'installation depuis le moyen d'assistance au serveur de maintenance,
- rechercher une session de maintenance dans le serveur de maintenance en fonction des informations transmises, et
- exécuter une session de maintenance trouvée en affichant des consignes transmises par le serveur de maintenance dans le moyen d'assistance et en effectuant les consignes dans l'installation.

L'invention concerne encore un procédé pour configurer un équipement dans une installation de télécommunication telle que définie ci-dessus pour la mise en oeuvre du système de maintenance selon l'invention. Le procédé de configuration est caractérisé en ce qu'il comprend les étapes suivantes:
- fournir un moyen d'assistance portable tel que défini ci-dessus, et un serveur du fabricant de l'équipement,
- appeler le serveur de fabricant depuis le moyen d'assistance et lui transmettre un identificateur de l'équipement,
- ouvrir dans le serveur de fabricant une session de configuration en fonction de l'identificateur transmis, et
- exécuter la session de configuration en affichant des consignes transmises par le serveur du fabricant dans le moyen d'assistance et en effectuant les consignes notamment dans l'équipement.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc-diagramme schématique d'un système de maintenance d'une installation de télécommunication selon l'invention ;
- la figure 2 est un bloc-diagramme schématique d'un dispositif d'assistance pour l'exploitation et la maintenance de l'installation ;
- la figure 3 est un algorithme de dépannage de l'installation de télécommunication ; et
- la figure 4 est un algorithme de configuration d'un terminal dans l'installation de télécommunication.

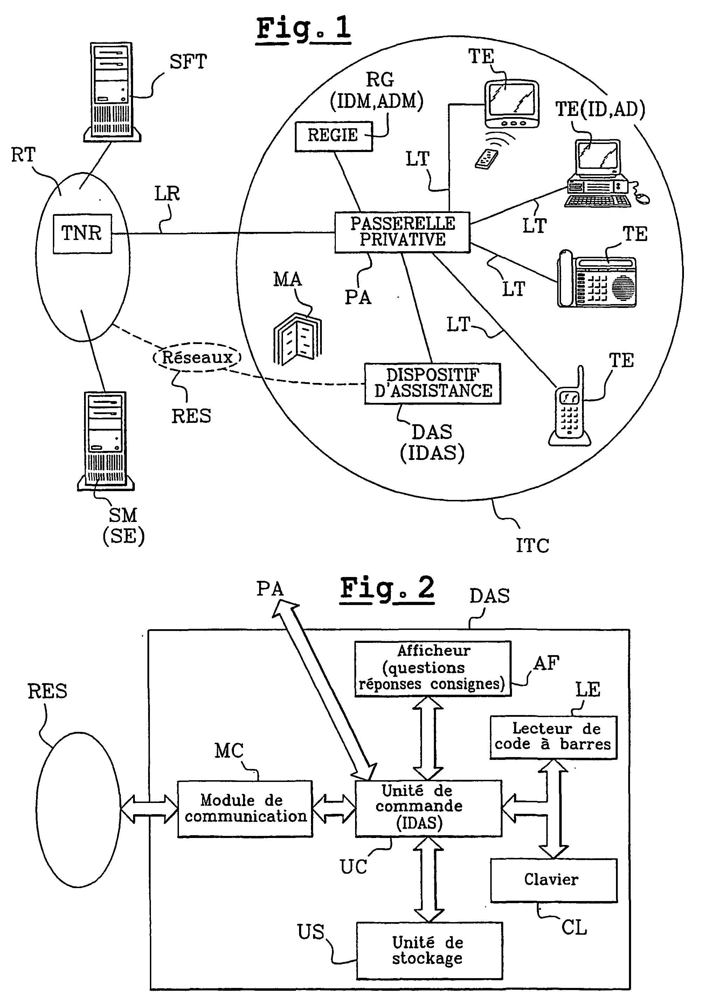

En référence à la figure 1, une installation de télécommunication terminale privative ITC chez un client/usager comprend essentiellement un réseau privé de plusieurs terminaux TE répartis dans les locaux du client, tels que des pièces du domicile du client, une passerelle privative PA constituant un noeud de communication dans l'installation entre des lignes terminales LT desservant les terminaux TE et une ligne de réseau LR reliée à des réseaux de télécommunication extérieurs RT, et une régie RG pour gérer l'installation ITC.

Un terminal TE peut être un micro-ordinateur, un appareil de commande et/ou de surveillance domotique par exemple, un serveur local, un poste téléphonique numérique, un récepteur de télévision câblé, etc. Comme on le verra dans la suite, l'invention assure la mise en service et le dépannage des terminaux TE. Chaque terminal est identifié par un identificateur ID sous la forme d'un code à barres apposé sur le terminal et donnant accès à l'identité du constructeur du terminal, au type du terminal, au numéro de série du terminal et éventuellement à la version logicielle du driver installé dans le terminal.

Dans l'installation ITC, les lignes terminales LT forment un réseau en étoile, ou bien un réseau distribué, ou bien des boucles locales desservant chacune un ou plusieurs terminaux. Tout ou partie d'une ligne terminale LT est constituée par une ou deux paires de fils métalliques, ou par une fibre optique. La ligne de réseau LR est par exemple composée de deux paires symétriques de fils métalliques et est reliée par exemple à une terminaison numérique de réseau TNR de type RNIS ou ADSL.

A titre d'exemple, l'installation de télécommunication ITC est analogue à l'installation de client multi-terminaux rattachée à travers la ligne de réseau LR à un commutateur numérique d'un réseau de télécommunication asynchrone ATM, telle que décrite dans la demande de brevet français FR 2794591 A. Dans cette installation, la passerelle PA est un répliqueur-routeur de cellules ATM. Le répliqueur diffuse des cellules ATM de la voie de réception de la ligne de réseau LR vers des boucles locales constituées par les lignes terminales LT, c'est-à-dire recopie chaque cellule de réseau reçue dans chaque boucle locale. Le routeur collecte des cellules ATM produites par les terminaux TE pour les transmettre dans une voie d'émission de la ligne de réseau LR et le cas échéant pour diffuser certaines cellules produites par les terminaux dans les boucles locales à travers le répliqueur de manière à assurer une intercommunication entre les terminaux dans l'installation.

Dans ce type d'installation, des répliqueurs-routeurs sont mis en cascade. Les répliqueurs et les routeurs comprennent des coupleurs de sortie et des coupleurs d'entrée pour relier les terminaux TE à la passerelle PA ainsi que des coupleurs d'entrée et des coupleurs de sortie pour relier la passerelle au réseau de télécommunication RT.

Par ailleurs, un terminal TE est relié à une boucle locale LT à travers un adaptateur pour recevoir des cellules diffusées ATM et insérer des cellules ATM produites par le terminal dans la boucle locale et pour répéter des cellules à retransmettre vers d'autres terminaux dans la boucle.

Les répliqueurs et les routeurs, et particulièrement les coupleurs dans ceux-ci, ainsi que les terminaux et leurs adaptateurs sont répertoriés dans la régie RG au fur et à mesure de l'installation.

La régie RG contient une base de données centralisant toutes les informations sur l'architecture de l'installation ITC et de ses équipements, tels que répliqueurs, routeurs, coupleurs, adaptateurs et terminaux. De préférence, chaque nouvel équipement à introduire dans l'installation ITC est configuré semi-automatiquement depuis la régie RG. La régie RG inventorie l'état des configurations courantes des équipements et héberge éventuellement des applications de manière centralisée. Par exemple, des bibliothèques de logiciel sont mises à jour dans la régie et permettent d'activer et d'exploiter les terminaux.

Selon d'autres variantes, la passerelle PA est un autocommutateur téléphonique privé PABX associé à une plate-forme de type serveur informatique constituant la régie RG. La régie RG contient en outre dans sa base de données le profil des utilisateurs des terminaux, tel que leurs noms, leurs fonctions, leurs localisations géographiques, leurs numéros d'annuaire, la liste des services auxquels ils ont accès, etc.

De manière plus générale, la régie RG non seulement gère les données de l'installation ITC, mais également participe à la programmation des terminaux TE dans l'installation.

En variante, la régie RG est déportée à l'extérieur des locaux du client, par exemple à travers une ligne spécialisée.

A l'installation ITC est associé un dispositif d'assistance portable et autonome DAS pour assister le client dans l'exploitation et la maintenance de l'installation ITC.

Comme illustré schématiquement à la figure 2, le dispositif d'assistance DAS est organisé autour d'une unité de commande UC constituée par un microcontrôleur, et comprend, reliés à l'unité de commande, un lecteur de code à barres LE, un clavier CL, un afficheur AF et un module de communication MC. Le dispositif DAS a la taille d'un terminal radiotéléphonique mobile ou d'un assistant électronique, et présente une ergonomie et une interface homme-machine comparable à ceux-ci.

Le lecteur de code à barres LE sert à lire des informations sur au moins l'un des équipements de l'installation, tels que les terminaux TE, afin de saisir automatiquement l'identificateur ID du terminal et une adresse de télécommunication AD du fabricant du terminal également apposés sous forme de codes à barres sur le terminal, et à saisir automatiquement un identificateur IDM de l'installation ITC et une adresse de télécommunication ADM d'un serveur de maintenance SM, apposés sous forme de codes à barres sur la régie RG et/ou sur la passerelle PA.

Comme montré à la figure 1, le système de maintenance selon l'invention comprend, outre le dispositif d'assistance DAS, un serveur de maintenance SM appartenant au prestataire gestionnaire de l'installation ITC et des serveurs SFT appartenant à des fabricants d'équipements, tels que terminaux. Le serveur de maintenance SM contient un système expert SE capable de sélectionner une session de maintenance prédéterminée dans une bibliothèque de sessions de maintenance en fonction d'informations dans des réponses du client transmises par le dispositif DAS à des questions établies par le serveur SM, au début d'une procédure de maintenance. Chaque serveur SFT sert à installer un terminal TE ou tout autre équipement d'un fabricant déterminé dans l'installation ITC en guidant le client pas-à-pas au moyen du dispositif DAS, comme on le verra ci-après. Le serveur SFT peut également fournir au client des drivers relatifs aux équipements installés ainsi que des notices d'instruction de dépannage concernant précisément ces équipements.

Le système de maintenance de l'invention peut également comprendre d'autres serveurs de service pour assister le client dans des applications logicielles à installer dans les terminaux.

Le module de communication MC connecte l'unité de commande UC du dispositif d'assistance DAS aux serveurs SM et SFT à travers des réseaux de télécommunication RES en fonction du type du module de communication. Par exemple, comme montré en traits pointillés à la figure 1, le module de communication MC communique à travers une liaison radiotéléphonique de type GSM avec les serveurs SM et SFT, et le dispositif d'assistance DAS possède alors toutes les fonctionnalités d'un terminal radiotéléphonique mobile. Selon une autre variante, le dispositif DAS est équipé d'un modem constituant le module de télécommunication MC pour assurer une liaison de données avec les serveurs SM et SFT à travers le réseau téléphonique commuté et le cas échéant à travers un réseau à haut débit, tel qu'Internet, désignés par les réseaux RES dans la figure 1.

Selon encore une autre variante pouvant être combinée aux précédentes, l'unité de commande UC du dispositif DAS est reliée de manière amovible à la passerelle PA pour communiquer avec les serveurs SM et SFT à travers les réseaux RT reliés à la ligne de réseau LR de l'installation.

Par exemple, pour cette dernière variante, lorsque l'installation ITC fonctionne en mode ATM, la passerelle PA réserve une voie virtuelle au dispositif DAS, comme pour un terminal TE de l'installation, dans le conduit virtuel constitué par la ligne de réseau LR ; un identificateur de voie virtuelle VCI (Virtual Channel Identifier) est attribué au dispositif d'assistance DAS par la passerelle PA et constitue ainsi, de manière générale, une adresse de télécommunication IDAS du dispositif d'assistance DAS pour des communications de celui-ci à travers la ligne de réseau LR.

Ainsi, grâce à la lecture automatique d'identificateur et d'adresse de télécommunication par le lecteur LE, l'unité de commande UC dans le dispositif d'assistance DAS appelle automatiquement le serveur de maintenance SM en fonction de l'adresse lue ADM de manière à participer à une procédure de maintenance dont des consignes sont inscrites sur l'afficheur AF, ou bien appelle automatiquement le serveur SFT du fabricant d'un terminal en fonction de l'adresse lue AD de manière à participer à une procédure de configuration dont les consignes sont inscrites sur l'afficheur AF. Le client est ainsi guidé pas à pas suivant les consignes affichées pour dépanner l'installation ou pour configurer un équipement TE de l'installation, tel que terminal. En parallèle, la base de données dans la régie RG met à jour les informations collectées concernant l'installation ITC et les terminaux TE, ainsi que de préférence des applications locales.

L'ergonomie des applications dans l'installation est améliorée grâce à l'incorporation d'un navigateur dans le dispositif d'assistance DAS qui offre une interface graphique à l'utilisateur par l'intermédiaire du clavier CL et de l'afficheur AF. De préférence, l'ergonomie du navigateur est également présentée par la régie RG qui est couplée au dispositif DAS à travers la passerelle PA, tout en assurant un "nomadisme" limité au dispositif d'assistance DAS pour relever les adresses ADM et AD et les identificateurs IDM et ID sous forme de codes à barres sur la régie RG et/ou la passerelle PA, et les équipements tels que terminaux TE. Le dispositif d'assistance DAS se présente ainsi de préférence comme un objet électronique portable, compact, autonome et de petite taille.

Le dispositif d'assistance DAS comprend de préférence une unité de stockage US, par exemple une mémoire non volatile EEPROM ou une mémoire RAM statique, pour mémoriser des sessions de maintenance et des sessions de configuration de terminal les plus courantes afin d'éviter des appels trop fréquents des serveurs SM et SFT. L'unité de stockage US est ainsi équivalente à un "serveur cache" de proximité de l'installation ITC pour mémoriser des questions/consignes - réponses de session et ainsi éviter des temps d'attente de réponse des serveurs SM et SFT et un engorgement excessif des réseaux RES ou RT.

Afin d'assurer la confidentialité des échanges entre le dispositif d'assistance DAS et au moins le serveur de maintenance SM, une authentification du dispositif DAS est effectuée par le serveur SM préalablement à une session de maintenance. Par exemple, le dispositif DAS comprend en mémoire morte une clé qui est appliquée avec un nombre aléatoire reçu du serveur SM à un algorithme d'authentification prédéterminé afin de produire un résultat qui est transmis au serveur SM qui le compare à un résultat équivalent produit par ce serveur. Après l'authentification, le dispositif d'assistance DAS se déclare en tant que client auprès du serveur SM en lui transmettant un identificateur IDAS afin que le serveur SM vérifie dans une table de clients que l'identificateur transmis correspond bien à une installation dont la maintenance doit être assistée.

Le dispositif d'assistance DAS est de préférence associé à un manuel d'utilisateur MA qui répertorie des informations sur des procédures de maintenance et des diagnostics de défaillance pour les principaux types d'installation ITC. En marge sur les pages de manuel sont inscrits des codes à barres représentant des informations et lisibles par le lecteur LE afin que le serveur de maintenance SM identifie des caractéristiques de l'installation et des défaillances de l'installation ou d'un équipement déterminé dans celle-ci et propose une session de maintenance interactive composée de questions et de consignes présentées par l'afficheur AF en fonction de réponses du client/utilisateur afin de le guider pas à pas. Les consignes peuvent être transformées, via l'unité de commande UC, en des commandes transmises à la régie RG.

Plus précisément, comme on le verra ci-après, préalablement à une session de maintenance interactive, le dispositif d'assistance DAS et le serveur de maintenance SM échangent des questions posées par le serveur au dispositif et des réponses transmises par le client au moyen du clavier CL et/ou par saisie de codes à barres sur le manuel MA au moyen du lecteur LE pour établir des informations sur le type de l'installation et sur au moins une défaillance dans l'installation ; puis le serveur SM recherche dans le système expert SE une session de maintenance correspondant sensiblement aux réponses reçues et transmet des consignes et éventuellement des questions au dispositif DAS pour les visualiser sur l'afficheur AF afin que le client remédie à la défaillance au fur et à mesure de l'exécution de chaque consigne affichée dans l'installation et de la validation de la consigne exécutée. Les questions, les réponses et les consignes sont présentées sous forme de menus et fenêtres glissantes de quelques lignes dans l'afficheur AF.

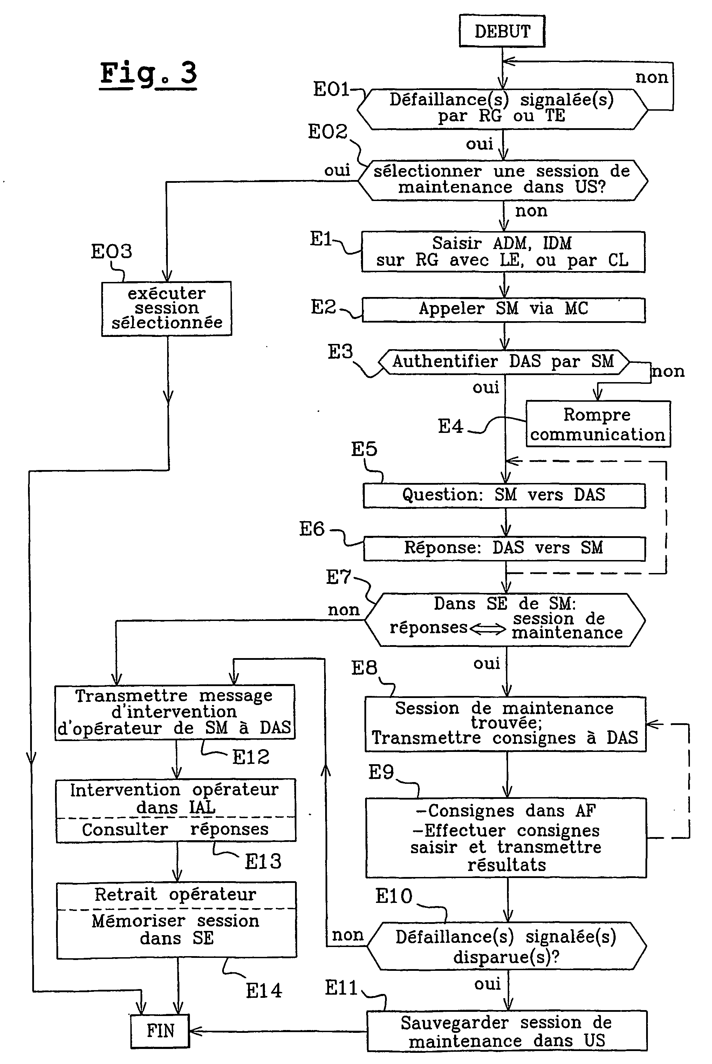

En référence à la figure 3, un dépannage de l'installation ITC comprend les étapes suivantes E1 à E14 à la suite d'une défaillance ou d'un dysfonctionnement interne détecté par la régie RG ou par un équipement tel que terminal TE à une étape initiale E01.

Après mise en marche du dispositif DAS, et sélection d'une procédure de télé-dépannage interactive au moyen du serveur SM dans une page d'accueil sur l'afficheur AF du dispositif DAS à une étape préalable E02, le client s'approche de la régie RG ou de la passerelle PA pour saisir l'adresse ADM du serveur de maintenance SM et l'identificateur IDM définissant le type et les caractéristiques de l'installation ITC au moyen du lecteur LE, ou le cas échéant saisit ces deux paramètres au clavier CL, à l'étape E1. L'unité de commande UC active le module de communication MC, ou la passerelle PA, pour appeler automatiquement le serveur SM en fonction de l'adresse saisie ADM à l'étape E2. Après l'établissement de la communication entre le dispositif DAS et le serveur SM, le serveur SM authentifie le dispositif DAS à l'étape E3. Sinon, le serveur SM rompt la communication avec le dispositif DAS à l'étape E4.

A des couples d'étapes suivantes E5 et E6, le serveur SM invite l'usager à composer des réponses avec le clavier CL ou des réponses saisies avec le lecteur LE, respectivement à des questions posées sur l'afficheur AF de manière déroulante en fonction de l'identificateur saisi IDM. Les réponses sont élaborées au moyen du clavier CL et de préférence au moyen de codes à barres lus par le lecteur LE sur les équipements de l'installation et le manuel d'utilisateur MA.

Le système expert SE dans le serveur SM recherche une session de maintenance interactive correspondant sensiblement aux défaillances et problèmes signalés dans les réponses transmises par le dispositif DAS à l'étape E7. Lorsqu'une session de maintenance est trouvée, le serveur SM transmet des premières consignes au dispositif DAS à l'étape E8. Dans le dispositif DAS à l'étape E9, les consignes sont présentées dans l'afficheur AF. Le client exécute les consignes dans l'installation, les valide et le cas échéant renseigne à nouveau le serveur SM en fonction des résultats des consignes exécutées. Les résultats sont renvoyés au système expert SE afin que celui-ci procède le cas échéant à une transmission d'autres consignes au dispositif DAS, pour guider pas à pas le client et ainsi remédier à la ou aux défaillances signalées dans l'installation ou dans un équipement déterminé de celle-ci.

Si à la fin de la session de maintenance, à l'étape E10, la ou les défaillances signalées ont disparu, le client est invité à sauvegarder la session de maintenance précédente dans l'unité de stockage US, ou en variante dans la régie RG, à l'étape E11. La session ainsi sauvegardée dans le dispositif DAS peut être ultérieurement sélectionnée pour une défaillance analogue à la défaillance précédente, en interne à l'installation, sans communication avec le serveur SM, comme indiqué à une étape E03 succédant à l'étape préalable E02 dans la figure 3.

Si à l'étape E7, le système expert SE est incapable de trouver une session de maintenance en correspondance avec les réponses relatives aux caractéristiques et à au moins une défaillance de l'installation, ou bien si la ou les défaillances signalées n'ont pas disparu à l'étape E10, le serveur SM transmet un message au dispositif d'assistance DAS, à l'étape E12, pour inviter le client à prendre un rendez-vous avec un opérateur du prestataire gestionnaire de l'installation ITC. Lors de l'intervention ultérieure de l'opérateur à l'étape E13, l'opérateur dispose des réponses transmises au serveur SM et de préférence mémorisées dans l'unité de stockage US aux étapes précédentes E6 et E9 pour établir avec une meilleure efficacité un diagnostic du dépannage. Puis après dépannage à l'étape E14, de retour sur le site du serveur SM, l'opérateur enrichit le système expert SE en intégrant le cas échéant une session de maintenance correspondant au dépannage qu'il a effectué pour le type de l'installation ITC.

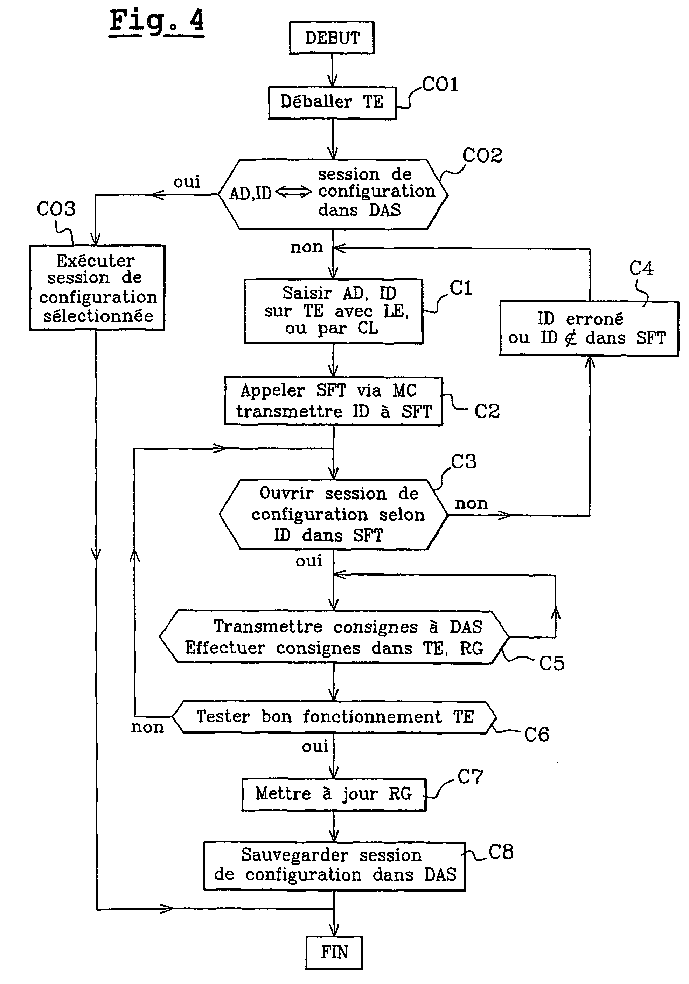

L'installation d'un nouvel équipement, tel qu'un nouveau terminal TE, dans l'installation terminale de client ITC comprend essentiellement les étapes C1 à C8 de l'algorithme montré à la figure 4, après avoir déballé le nouveau terminal TE à une étape initiale C01 et sélectionné une procédure de télé-configuration interactive dans la page d'accueil à une étape préalable C02.

A l'aide du lecteur LE, l'adresse de télécommunication AD du fabricant du terminal TE et l'identificateur ID des caractéristiques du terminal TE sont saisis, ou bien le client saisit les paramètres AD et ID au moyen du clavier CL lorsque le terminal n'est pas encore doté de codes à barres, à la première étape C1. Puis l'unité UC dans le dispositif d'assistance DAS déclenche automatiquement via le module de communication MC, ou via la passerelle PA, un appel du serveur SFT du fabricant du terminal TE en fonction de l'adresse de télécommunication saisie AD, à l'étape C2.

Après l'établissement de la communication entre le dispositif DAS et le serveur SFT, une session de configuration interactive entre le dispositif DAS et le serveur SFT est ouverte par le serveur SFT en fonction de l'identificateur saisi ID, à l'étape C3. Si l'identificateur ID est erroné, ou si aucune session de configuration ne correspond à l'identificateur ID, le serveur SFT invite le client à saisir de nouveau l'identificateur ID, à l'étape C4, en revenant à l'étape C1, à moins que le client décide d'abréger la procédure d'installation de terminal.

L'ouverture de la session de configuration à l'étape C3 entraîne la transmission de consignes depuis le serveur SFT au dispositif DAS, en les présentant sur l'afficheur AF et inversement des transmissions de renseignements ou de résultats depuis le dispositif DAS vers le serveur SFT en réponse aux consignes effectuées ou à des questions posées par le serveur SFT, à l'étape C5. Au cours de la session de configuration, le client installe le terminal TE dans l'installation ITC, par exemple suivant une session normalisée ou une session personnalisée en sélectionnant des options de configuration, des profils d'utilisateur du terminal, des drivers à installer dans le terminal, etc. En particulier, des drivers peuvent être téléchargés depuis le serveur SFT à travers les réseaux RT et la passerelle PA, dans la régie RG de l'installation ITC. A la fin de la session, le serveur SFT guide de nouveau le client pour tester le bon fonctionnement du terminal TE installé suivant plusieurs tests à l'étape C6. Si le résultat de l'un des tests n'est pas satisfaisant, le serveur SFT revient à l'étape d'ouverture de session de configuration à l'étape C3, pour transmettre à nouveau des consignes en correspondance au mauvais résultat de l'un des tests.

Lorsque le terminal TE fonctionne de manière satisfaisante après les tests de l'étape C6, le dispositif DAS déclenche une mise à jour de la base de données des équipements de l'installation dans la régie RG, et particulièrement introduit dans cette base de données toutes les caractéristiques concernant le fonctionnement et la localisation du terminal TE, à l'étape C7.

Finalement, à l'étape C8, le client déclenche, s'il le souhaite, une sauvegarde de la session de configuration du nouveau terminal TE dans l'unité de stockage US du dispositif d'assistance DAS, ou en variante dans la régie RG, afin de sélectionner ultérieurement ladite session en correspondance avec l'adresse AD et une partie de l'identificateur ID pour un autre terminal devant être configuré et analogue au terminal précédent, comme indiqué à une étape C03 succédant à l'étape préalable C02 dans la figure 4.

## Revendications

1. Système de maintenance d'une installation de télécommunication (ITC) à l'aide d'un serveur de maintenance (SM), ladite installation comprenant des équipements (TE), un moyen de gestion d'installation (RG) et un moyen de communication (PA) entre une ligne de réseau (LR) et les équipements et le moyen de gestion, **caractérisé en ce qu'**il comprend un moyen d'assistance portable (DAS) pour établir des informations sur le type de l'installation et sur au moins une défaillance dans l'installation (ITC), et **en ce que** le serveur de maintenance (SM) est apte à sélectionner une session de maintenance en fonction des informations transmises par le moyen d'assistance et à présenter des consignes dans le moyen d'assistance.

2. Système de maintenance conforme à la revendication 1, dans lequel le moyen d'assistance (DAS) comprend un moyen (LE) pour saisir automatiquement un identificateur (IDM) de l'installation (ITC) et une adresse de télécommunication (ADM) du serveur de maintenance (SM) sur le moyen de gestion (RG) ou sur le moyen de communication (PA), le moyen d'assistance étant apte à appeler automatiquement le serveur de maintenance (SM) en fonction de l'adresse saisie (ADM), et puis à effectuer une session de maintenance entre le moyen d'assistance (DAS) et le serveur de maintenance (SM) en fonction de l'identificateur d'installation saisi (IDM).

3. Système de maintenance conforme à la revendication 2, selon lequel le moyen d'assistance (DAS) est associé à un manuel (MA) répertoriant des procédures de maintenance associées à des informations, des informations étant représentées par des codes à barres lisibles par le moyen pour saisir (LE).

4. Système de maintenance conforme à l'une quelconque des revendications 1 à 3, selon lequel le moyen d'assistance (DAS) est relié au moyen de communication (PA), et le moyen de communication (PA) est apte à attribuer une adresse de télécommunication (IDAS) au moyen d'assistance pour des communications de celui-ci à travers la ligne de réseau (LR).

5. Système de maintenance conforme à l'une quelconque des revendications 1 à 4, selon lequel le moyen d'assistance (DAS) possède les fonctionnalités, d'un terminal radiotéléphonique mobile, étant apte à communiquer avec le serveur de maintenance (SM) à travers une liaison radiotéléphonique (RES), ou est équipé d'un modem, étant apte à communiquer avec le serveur de maintenance à travers une liaison de données (RES).

6. Système de maintenance conforme à l'une quelconque des revendications 1 à 5, dans lequel le moyen d'assistance (DAS) comprend un moyen (LE) pour saisir automatiquement un identificateur (ID) et une adresse de télécommunication de fabricant (AD) sur au moins l'un des équipements (TE), le moyen d'assistance étant apte à appeler automatiquement un serveur (SFT) du fabricant de l'équipement en fonction de l'adresse saisie (AD), et puis à effectuer une session de configuration de l'équipement entre le moyen d'assistance (DAS) et le serveur de fabricant (SFT) en fonction de l'identificateur d'équipement saisi (ID).

7. Système de maintenance conforme à l'une quelconque des revendications 1 à 6, dans lequel le moyen d'assistance (DAS) incorpore un navigateur.

8. Système de maintenance conforme à l'une quelconque des revendications 1 à 7, comprenant un moyen de stockage (US) pour mémoriser des sessions.

9. Procédé de maintenance d'une installation de télécommunication (ITC) à l'aide d'un serveur de maintenance (SM), ladite installation comprenant des équipements (TE), un moyen de gestion d'installation (RG) et un moyen de communication (PA) entre une ligne de réseau (LR) et les équipements et le moyen de gestion, pour la mise en oeuvre du système de maintenance conforme à l'une quelconque des revendications 1 à 8, **caractérisé en ce qu'**il comprend les étapes suivantes :
- fournir un moyen d'assistance portable (DAS) pour établir des informations sur le type de l'installation et sur au moins une défaillance dans l'installation (ITC) afin que le serveur de maintenance (SM) sélectionne une session de maintenance en fonction des informations transmises par le moyen d'assistance et présente des consignes dans le moyen d'assistance,
- appeler (E2) le serveur de maintenance (SM) depuis le moyen d'assistance (DAS),
- transmettre (E6) lesdites informations depuis le moyen d'assistance au serveur de maintenance,
- rechercher (E7) une session de maintenance dans le serveur de maintenance en fonction des informations transmises, et
- exécuter (E8, E9) une session de maintenance trouvée en affichant des consignes transmises par le serveur de maintenance dans le moyen d'assistance et en effectuant les consignes dans l'installation.

10. Procédé conforme à la revendication 9, comprenant préalablement une saisie (E1) d'un identificateur (IDM) de l'installation (ITC) et d'une adresse de télécommunication (ADM) du serveur de maintenance (SM) sur le moyen de gestion d'installation (RE) ou sur le moyen de communication (PA), de préférence au moyen d'un lecteur de code à barres (LE).

11. Procédé conforme à la revendication 9 ou 10, comprenant après l'étape d'exécuter la session (E8, E9), une sauvegarde (E11) de la session de maintenance dans le moyen d'assistance (DAS), ou dans le moyen de gestion (RG), afin de sélectionner (E01, E03) ultérieurement ladite session lorsque l'installation présente une défaillance analogue à ladite défaillance.

12. Procédé pour configurer un équipement (TE) dans une installation de télécommunication (ITC) comprenant en outre un moyen de gestion d'installation (RG) et un moyen de communication (PA) entre une ligne de réseau (LR) et des équipements et le moyen de gestion, pour la mise en oeuvre du système de maintenance conforme à l'une quelconque des revendications 1 à 8, **caractérisé en ce qu'**il comprend les étapes suivantes :
- fournir un moyen d'assistance portable (DAS) pour établir des informations sur le type de l'installation et sur au moins une défaillance dans l'installation (ITC), et un serveur (SFT) du fabricant de l'équipement,
- appeler (C2) le serveur de fabricant (SFT) depuis le moyen d'assistance (DAS) et lui transmettre un identificateur (ID) de l'équipement,
- ouvrir (C3) dans le serveur de fabricant (SFT) une session de configuration en fonction de l'identificateur transmis (ID), et
- exécuter (C5) la session de configuration en affichant des consignes transmises par le serveur de fabricant dans le moyen d'assistance et en effectuant les consignes notamment dans l'équipement.

13. Procédé conforme à la revendication 12, comprenant préalablement une saisie (C1) de l'identificateur (ID) de l'équipement (TE) et d'une adresse de télécommunication (AD) du serveur de fabricant sur ledit équipement (TE), de préférence au moyen d'un lecteur de code à barres (LE).

14. Procédé conforme à la revendication 12 ou 13, comprenant une mise à jour (C7) d'une base de données dans le moyen de gestion (RG) en fonction de caractéristiques de fonctionnement et de localisation de l'équipement (TE), de préférence après un test (C6) de bon fonctionnement de l'équipement.

15. Procédé conforme à l'une quelconque des revendications 12 à 14, comprenant après l'exécution (C5) de la session de configuration, une sauvegarde (C8) de la session de configuration dans le moyen d'assistance (DAS), ou dans le moyen de gestion (RG), afin de sélectionner (C02), (C03) ultérieurement ladite session pour un autre équipement analogue audit équipement qui doit être configuré.

## Patentansprüche

1. Wartungssystem für eine Telekommunikationsanlage (ITC) mit einem Wartungsserver (SM), wobei die Anlage Endgeräte (TE), eine Vorrichtung zur Steuerung der Anlage (RG) sowie eine Vorrichtung zur Kommunikation (PA) zwischen einer Netzleitung (LR) und den Endgeräten und der Steuerungsvorrichtung umfasst, **dadurch gekennzeichnet, dass** es eine tragbare Hilfsvorrichtung (DAS) umfasst, mit der sich Informationen über den Typ der Anlage und über mindestens eine Störung innerhalb der Anlage (ITC) ermitteln lassen, und dass der Wartungsserver die Fähigkeit besitzt, entsprechend den von der Hilfsvorrichtung übermittelten Informationen eine Wartungssitzung auszuwählen und auf der Hilfsvorrichtung Anweisungen anzuzeigen.

2. Wartungssystem nach Anspruch 1, wobei die Hilfsvorrichtung (DAS) eine Vorrichtung (LE) zur automatischen Erfassung einer auf der Steuerungsvorrichtung (RG) oder auf der Kommunikationsvorrichtung (PA) befindlichen Kennung (IDM) der Anlage (ITC) und einer auf der Steuerungsvorrichtung (RG) oder auf der Kommunikationsvorrichtung (PA) befindlichen Telekommunikationsadresse (ADM) des Wartungsservers (SM) umfasst, und die Fähigkeit besitzt, den Wartungsserver (SM) anhand der erfassten Adresse (ADM) automatisch anzuwählen und sodann eine Wartungssitzung zwischen der Hilfsvorrichtung (DAS) und dem Wartungsserver (SM) entsprechend der erfassten Anlagenkennung (IDM) durchzuführen.

3. Wartungssystem nach Anspruch 2, wobei zu der Hilfsvorrichtung (DAS) ein Handbuch (MA) gehört, in dem mit bestimmten Informationen verknüpfte Wartungsmaßnahmen verzeichnet sind, wobei diese Informationen sind in Form von Barcodes dargestellt sind, die von der Erfassungsvorrichtung (LE) ausgelesen werden können.

4. Wartungssystem nach einem der Ansprüche 1 bis 3, wobei die Hilfsvorrichtung (DAS) mit der Kommunikationsvorrichtung (PA) verbunden ist und die Kommunikationsvorrichtung die Fähigkeit besitzt, der Hilfsvorrichtung für deren Kommunikation über die Netzleitung eine Telekommunikationsadresse (IDAS) zuzuweisen.

5. Wartungssystem nach einem der Ansprüche 1 bis 4, wobei die Hilfsvorrichtung (DAS) die Funktionalitäten eines Mobilfunktelefons besitzt und in der Lage ist, über eine Funktelefonverbindung (RES) mit dem Wartungsserver zu kommunizieren, oder mit einem Modem ausgestattet ist, das über eine Datenverbindung (RES) mit dem Wartungsserver kommunizieren kann.

6. Wartungssystem nach einem der Ansprüche 1 bis 5, wobei die Hilfsvorrichtung (DAS) eine Vorrichtung (LE) zur automatischen Erfassung einer auf mindestens einem der Endgeräte (TE) befindlichen Kennung (ID) und einer auf mindestens einem der Endgeräte (TE) befindlichen Hersteller-Telekommunikationsadresse (AD) umfasst und dabei in der Lage ist, anhand der erfassten Adresse (AD) automatisch einen Server (SFT) des Geräteherstellers anzuwählen und dann entsprechend der erfassten Gerätekennung (ID) eine Konfigurationssitzung des Geräts zwischen der Hilfsvorrichtung (DAS) und dem Server des Herstellers (SFT) durchzuführen.

7. Wartungssystem nach einem der Ansprüche 1 bis 6, wobei die Hilfsvorrichtung (DAS) einen Webbrowser umfasst.

8. Wartungssystem nach einem der Ansprüche 1 bis 7, das eine Speichervorrichtung (US) zum Speichern der Sitzungen enthält.

9. Verfahren zur Wartung einer Telekommunikationsanlage (ITC) mittels eines Wartungsservers (SM), wobei die Anlage Endgeräte (TE), eine Vorrichtung zur Steuerung der Anlage (RG) und eine Kommunikationsvorrichtung (PA) zwischen einer Netzleitung (LR) und den Endgeräten und der Steuerungsvorrichtung umfasst, das der praktischen Umsetzung des Wartungssystems nach einem der Ansprüche 1 bis 8 dient, **dadurch gekennzeichnet, dass** es die folgenden Teilschritte umfasst:
- Bereitstellen einer tragbaren Hilfsvorrichtung (DAS) zur Ermittlung von Informationen über den Typ der Anlage und über mindestens eine Störung innerhalb der Anlage (ITC), so dass der Wartungsserver anhand der von der Hilfsvorrichtung übermittelten Informationen eine Wartungssitzung auswählt und auf der Hilfsvorrichtung Hinweise anzeigt;
- die Hilfsvorrichtung (DAS) wählt (E2) den Wartungsservers (SM) an;
- die Hilfsvorrichtung übermittelt (E6) die besagten Informationen an den Wartungsserver;
- Suche nach einer Wartungssitzung innerhalb des Wartungsserver entsprechend den übermittelten Informationen, und
- Ausführen (E8, E9) einer auf diese Weise gefundenen Wartungssitzung durch Anzeige der vom Wartungsserver übermittelten Informationen auf der Hilfsvorrichtung und durch Umsetzung der Hinweise in der Anlage.

10. Verfahren nach Anspruch 9, das vorab eine Erfassung (E1) einer auf der Steuerungsvorrichtung der Anlage (RE) oder auf der Kommunikationsvorrichtung (PA) befindlichen Kennung (IDM) der Anlage (ITC) und einer auf der Steuerungsvorrichtung der Anlage (RE) oder auf der Kommunikationsvorrichtung (PA) befindlichen Telekommunikationsadresse (ADM) des Wartungsservers umfasst, vorzugsweise mittels eines Barcode-Lesegeräts (LE).

11. Verfahren nach Anspruch 9 oder 10, das nach der Ausführung der Sitzung (E8, E9) eine Speicherung (E11) der Wartungssitzung in der Hilfsvorrichtung (DAS) oder in der Steuerungsvorrichtung umfasst, um zu einem späteren Zeitpunkt besagte Sitzung auszuwählen (E01, E03), wenn die Anlage eine Störung aufweist, die mit besagter Störung vergleichbar ist.

12. Verfahren zur Konfiguration von Endgeräten (TE) innerhalb einer Telekommunikationsanlage (ITC), die überdies eine Vorrichtung zur Steuerung der Anlage (RG) sowie eine Kommunikationsvorrichtung (PA) zwischen einer Netzleitung (LR) und den Endgeräten und der Steuerungsvorrichtung umfasst, das der praktischen Umsetzung des Wartungssystems nach einem der Ansprüche 1 bis 8 dient, **dadurch gekennzeichnet, dass** das Verfahren die folgenden Teilschritte aufweist:
- Bereitstellen einer tragbaren Hilfsvorrichtung (DAS) zur Ermittlung von Informationen über den Typ der Anlage und über mindestens eine Störung innerhalb der Anlage (ITC), sowie Bereitstellen eines Servers (SFT) des Endgeräte-Herstellers,
- die Hilfsvorrichtung (DAS) wählt (C2) den Hersteller-Server (SFT) an und übermittelt die Kennung (ID) des Endgeräts an ihn,
- Starten einer Konfigurationssitzung auf dem Server des Herstellers (SFT), entsprechend der übermittelten Kennung (ID), und
- Ausführen (C5) der Konfigurationssitzung durch Anzeige der vom Hersteller-Server übertragenen Hinweise auf der Hilfsvorrichtung und durch Ausführen der Hinweise insbesondere auf dem Endgerät.

13. Verfahren nach Anspruch 12, das vorab eine Erfassung (C1) der Kennung (ID) des Endgeräts (TE) und einer Telekommunikationsadresse (AD) des Hersteller-Servers umfasst, die sich auf diesem Endgerät (TE) befinden, wobei diese Erfassung vorzugsweise mittels eines Barcode-Lesegeräts (LE) erfolgt.

14. Verfahren nach Anspruch 12 oder 13, das die Aktualisierung (C7) einer Datenbank innerhalb der Steuerungsvorrichtung (RG) entsprechend den Funktions- und Lageeigenschaften des Endgeräts (TE) umfasst, vorzugsweise nach einer Überprüfung (C6) der Funktionstüchtigkeit des Geräts.

15. Verfahren nach einem der Ansprüche 12 bis 14, das nach Ausführung (C5) der Konfigurationssitzung eine Speicherung (C8) der Konfigurationssitzung innerhalb der Hilfsvorrichtung (DAS) oder der Steuerungsvorrichtung (RG) umfasst, um zu einem späteren Zeitpunkt diese Sitzung für ein anderes Endgerät, das mit besagtem Endgerät vergleichbar ist und konfiguriert werden muss, auszuwählen (C02), (C03).

## Claims

1. A maintenance system for maintaining a telecommunication installation (ITC) using a maintenance server (SM), said installation comprising equipment units (TE), installation management means (RG) and communication means (PA) for communication between a network line (LR) and the equipment units and the management means, **characterized in that** it comprises a portable assistance means (DAS) for deriving information on the type of the installation and on at least one fault in the installation (ITC), and **in that** the maintenance server (SM) is fitted to select a maintenance session as a function of the information transmitted by the assistance means and to show instructions on the assistance means.

2. A maintenance system according to claim 1, wherein the assistance means (DAS) comprises means (LE) for automatically entering an identifier (IDM) of the installation (ITC) and a telecommunication address (ADM) of the maintenance server (SM) on the management means (RG) or on the communication means (PA), the assistance means being fitted to call the maintenance server (SM) automatically as a function of the entered address (ADM), and then to effect a maintenance session involving the assistance means (DAS) and the maintenance server (SM) as a function of the entered identifier (IDM) of the installation.

3. A maintenance system according to claim 2, wherein the assistance means (DAS) is associated with a manual (MA) setting out maintenance procedures associated with information, the information being represented by bar codes that can be read by the entering means (LE).

4. A maintenance system according to any one of claims 1 to 3, wherein the assistance means (DAS) is connected to the communication means (PA), and the communication means (PA) is fitted to allocate a telecommunication address (IDAS) to the assistance means for calls thereby via the network line (LR).

5. A maintenance system according to any one of claims 1 to 4, wherein the assistance means (DAS) either has the functions of a mobile radio telephone terminal, being fitted to to communicate with the maintenance server (SM) via a radio telephone link (RES), or is equipped with a modem, being fitted to communicate with the maintenance server via a data link (RES).

6. A maintenance system according to any one of claims 1 to 5, wherein the assistance means (DAS) comprises means (LE) for automatically entering an identifier (ID) and a manufacturer telecommunication address (AD) on at least one of the equipment units (TE), the assistance means being fitted to call a server (SFT) of the manufacturer of the equipment unit automatically as a function of the entered address (AD), and then to effect a session, involving the assistance means (DAS) and the manufacturer server (SFT), for configuring the equipment unit as a function of the entered equipment unit identifier (ID).

7. A maintenance system according to any one of claims 1 to 6, wherein the assistance means (DAS) incorporates a browser.

8. A maintenance system according to any one of claims 1 to 7, including storage means (US) for storing sessions.

9. A maintenance method for maintaining a telecommunication installation (ITC) using a maintenance server (SM), said installation comprising equipment units (TE), installation management means (RG) and communication means (PA) for communication between a network line (LR) and the equipment units and the management means, for implementing a maintenance system according to any one of claims 1 to 8, **characterized in that** it comprises the following steps:
- providing a portable assistance means (DAS) for deriving information on the type of the installation and on at least one fault in the installation (ITC) in order for the maintenance server (SM) to select a maintenance session as a function of information transmitted by the assistance means and to show instructions on the assistance means,
- calling (E2) the maintenance server (SM) from the assistance means (DAS),
- transmitting (E6) said information from the assistance means to the maintenance server,
- searching (E7) for a maintenance session in the maintenance server as a function of the transmitted information, and
- executing (E8, E9) a maintenance session that has been found by displaying on the assistance means instructions transmitted by the maintenance server and by executing the instructions in the installation.

10. A method according to claim 9, comprising, before the aforementioned steps, entering (E1) an identifier (IDM) of the installation (ITC) and a telecommunication address (ADM) of the maintenance server (SM) on the installation management means (RE) or on the communication means (PA), preferably by means of a bar code reader (LE).

11. A method according to claim 9 or 10, comprising, after the step of executing the session (E8, E9), saving (E11) the maintenance session in the assistance means (DAS) or in the management means (RG) in order to select (E01, E03) said session subsequently if the installation is subject to a fault analogous to said fault.

12. A method of configuring an equipment unit (TE) in a telecommunication installation (ITC) further comprising installation management means (RG) and communication means (PA) between a network line (LR) and equipment units and the management means, for implementing a maintenance system according to any one of claims 1 to 8, **characterized in that** it comprises the following steps:
- providing a portable assistance means (DAS) for deriving information on the type of the installation and on at least one fault in the installation (ITC), and a server (SFT) of the manufacturer of the equipment unit,
- calling (C2) the manufacturer server (SFT) from the assistance means (DAS) and transmitting an identifier (ID) of the equipment unit,
- opening (C3) a configuration session in the manufacturer server (SFT) as a function of the transmitted identifier (ID), and
- executing (C5) the configuration session by displaying instructions transmitted by the manufacturer server on the assistance means and by executing the instructions in particular in the equipment unit.

13. A method according to claim 12, comprising, before the aforementioned steps, entering (C1) the identifier (ID) of the equipment unit (TE) and a telecommunication address (AD) of the manufacturer server on said equipment unit (TE), preferably by means of a bar code reader (LE).

14. A method according to claim 12 or claim 13, comprising updating (C7) a database in the management means (RG) as a function of operating and location characteristics of the equipment unit (TE), preferably after a test (C6) to check for correct operation of the equipment unit.

15. A method according to any one of claims 12 to 14, comprising, after executing (C5) the configuration session, saving (C8) the configuration session in the assistance means (DAS) or in the management means (RG), in order to select (C02, C03) said session subsequently for another equipment unit analogous to said equipment unit that is to be configured.
